# EUROPÄISCHE PATENTSCHRIFT

(11) **EP 1 688 312 B1**
(45) Veröffentlichungstag und Bekanntmachung des Hinweises auf die Patenterteilung: **27.05.2009**
(21) Anmeldenummer: 05405050.5
(22) Anmeldetag: 02.02.2005
(51) Int. Cl.: B60R 19/34, B62D 21/15, F16F 7/12

(54) **Energieabsorbierendes Deformationselement für Fahrzeuge**
Energy absorbing element for vehicles
Elément amortisseur pour vehicule

(43) Veröffentlichungstag der Anmeldung: 09.08.2006
(73) Patentinhaber: Alcan Technology & Management AG, 8212 Neuhausen am Rheinfall (CH)
(72) Erfinder: Saury, Laurent, 78315 Radolfzell (DE); Wehner, Frank, 78256 Steisslingen (DE); Fritz, Klaus, 78315 Radolfzell (DE); Lauterwald, Jürgen, 78247 Hilzingen (DE)

(56) Entgegenhaltungen:
- DE-A1- 10 062 802
- FR-A- 2 761 434
- US-A1- 2004 201 252
- US-A1- 2004 201 254

## Beschreibung

Vorliegende Erfindung betrifft ein Deformationselement aus Metall aus einem Mehrkammer-Hohlprofil mit einer Profillängsachse zur Aufnahme von in Richtung der Profillängsachse einwirkender Aufprallenergie, enthaltend wenigstens einen innen liegenden, das Hohlprofil in mehrere Kammern unterteilenden Profilsteg, wobei die Profilaussenwände anstelle von sich in Eckbereichen in einem Winkel schneidenden geraden Profilwänden gegen aussen gebogene Wandabschnitte aufweisen. Ferner betrifft die Erfindung die Verwendung solcher Deformationselemente.

Rohrförmige bzw. hohlprofilartige Deformationselemente zur Aufnahme von stirnseitig auf diese einwirkender Aufprallenergie sind allgemein bekannt. Ziel ist es jeweils gezielt kinetische Energie abzubauen, um Insassen und Ausrüstung zu schützen. Dazu soll idealerweise auf möglichst kurzem Weg maximale kinetische Energie durch Verformung des Deformationselements abgebaut werden. Die Absorption der Aufprallenergie geschieht durch gleichmässiges Falten der Profilwände beim Stauchen des Deformationselements. Je regelmässiger die Faltenstruktur ausfällt, desto höher ist die absorbierte Energie und desto konstanter ist in der Regel der Kraftverlauf.

Damit die an das Deformationselement anschliessende Fahrzeugstruktur in einem Aufprallereignis nicht beeinträchtigt wird, soll die Initialkraft, das heisst, die Kraft, welche auf das Deformationselement zur Auslösung des Faltvorganges einwirken muss, ein bestimmtes Mass nicht überschreiten. Die Initialkraft entspricht dabei der maximalen Kraftspitze im Kraft-Weg-Diagramm eines sich faltenden Deformationselementes und gilt daher als Richtgrösse zur Festlegung der maximalen Belastung der Fahrzeugstruktur.

Das Deformationselement soll ferner solcherart ausgelegt sein, dass es möglichst leicht und kostengünstig herstellbar ist und sich entlang seiner Längsachse Falten lässt, ohne wegzukippen. Das Deformationselement soll ferner eine gezielte Materialverteilung aufweisen, welche bei einem Aufprallereignis zu einer idealen Kompaktion des Bauteils führt.

Deformationselemente bzw. Energie absorbierende Strukturen sollen daher eine möglichst hohe spezifische Energieabsorption aufweisen, d.h. es soll möglichst viel Energie pro eingesetzte Masse absorbiert werden. Nur auf diese Weise kann den Forderungen nach möglichst leichten und gleichzeitig sicheren, d.h. mit Energie absorbierenden Strukturen ausgerüsteten, Fahrzeugen entsprochen werden.

Die CH 691 731 beschreibt beispielsweise ein Fahrzeug mit einer Stossstange, welche über Deformationselemente an Fahrzeuglängsträgem befestigt ist. Die Deformationselemente bestehen aus Mehrkammerhohlprofilen, mit wenigstens einem längslaufenden Innensteg. Ein Teil der Aufprallenergie wird durch die balgförmige Faltenbildung beim Stauchen des Deformationselements in Profillängsrichtung absorbiert.

Aus DE 100 62 802 ist ein Deformationselement für ein Kraftfahrzeug bekannt, mit einem Rohrteil runden Querschnitts.

Die US Patent Publikation 2004/0201252 beschreibt einen Hohlkörper, als sog. Crash-Structure, aus einem faserhaltigen Verbundmaterial mit unterschiedlicher Wanddicke und mit stufenförmiger verjüngender Wand.

Aus FR 2761434 ist ein Stoss absobierendes Element aus Verbundmaterialien in Form eines Rohrs bekannt, wobei das Element mittels Winkeleisen auf einer Metallplatte befestigt ist.

Die Deformationselemente sind häufig über sogenannte Platinen mit der hinter dem Stossfänger angeordneten Karosseriestruktur, in der Regel mit den Längsträgern, der Fahrzeuge verbunden. Die Deformationselemente sind dabei in der Regel stirnseitig auf die Platinen aufgeschweisst.

Das Aufschweissen des Deformationselements auf die Platine birgt einige verfahrenstechnische Schwierigkeiten. Zum einen soll der Schweissvorgang aus wirtschaftlichen Überlegungen möglichst effizient und mit einem hohen Automatisierungsgrad ausgeführt werden. Zum anderen sollen die Schweissnähte von hoher Qualität sein, damit diese den bei einem Aufprallereignis auf das Deformationselement und die Platine einwirkenden Kräfte standhalten.

Der Erfindung liegt die Aufgabe zugrunde, ein Deformationselement der eingangs genannten Art vorzuschlagen, welches dem oben beschriebenen idealen Verformungsverhalten möglichst nahe kommt und sich durch eine hohe spezifische Energieabsorption auszeichnet. Das Deformationselement soll zudem möglichst einfach und rationell auf eine Trägerplatine schweissbar sein.

Erfindungsgemäss wird die Aufgabe dadurch gelöst, dass das Deformationselement zusätzlich zu den gebogenen Wandabschnitten gerade Wandabschnitte enthält, wobei der Radius der gebogenen Wandabschnitte so gewählt ist, dass sich die Mittellinien der an die gebogenen Wandabschnitte anschliessenden geraden Wandabschnitte in einem Punkt ausserhalb des Profilquerschnittes schneiden und wobei der jeweilige Radius der gebogenen Wandabschnitte grösser als ein Achtel des kleinsten Querschnittsdurchmessers des Deformationselements ist.

Das heisst, die Profilwände des Deformationselements weisen keine Kanten ausbildenden Eckbereiche auf.

Der Radius der gebogenen Wandabschnitte ist bevorzugt grösser als ein Viertel, und insbesondere grösser als ein Drittel, des kleinsten Querschnittsdurchmessers des Deformationselements.

Ferner bilden die Profilaussenwände bevorzugt wenigstens zu 25 %, vorzugsweise wenigstens zu 50 %, bezogen auf ihre Gesamtumfangslänge, eine gebogene Aussenkontur aus.

Das Deformationselement kann zusätzlich zu den gebogenen Wandabschnitten gerade Wandabschnitte enthalten, wobei der Radius der gebogenen Wandabschnitte so gewählt ist, dass sich die Mittellinien der an die gebogenen Wandabschnitte anschliessenden geraden Wandabschnitte in einem Punkt ausserhalb des Profilquerschnittes schneiden.

Die geraden Wandabschnitte dienen dabei bevorzugt als Richtflächen zum Einspannen des Profils in ein Richtwerkzeug. Richtwerkzeuge werden unter anderem bei Schweissverfahren benötigt um eine möglichst präzise Schweissnaht zu erhalten. Hierbei hat es sich als besonderes vorteilhaft herausgestellt, wenn das Deformationselement wenigstens zwei, insbesondere genau zwei, in Distanz zueinander gegenüberliegende und parallel verlaufende gerade Wandabschnitte aufweist.

Der Radius der gebogenen Wandabschnitte entspricht bevorzugt wenigstens der halben Länge, vorzugsweise wenigstens der Länge der an die gebogenen Wandabschnitte anschliessenden geraden Wandabschnitte.

In einer spezifischen Ausführungsvariante der Erfindung besteht das Deformationselement, neben Profilstegen, aus zwei nach aussen gebogenen ersten Profilwandabschnitten und zwei geraden und parallel in Distanz zueinander verlaufenden zweiten Profilwandabschnitten. Die gebogenen, ersten Profilwandabschnitte verbinden die zwei in Abstand zueinander verlaufenden, geraden zweiten Profilwandabschnitte miteinander. Die gebogenen Profilwandabschnitte bilden dabei eine gegen aussen gerichtete Wölbung bzw. Bauchung aus. Sie können bsp. halbkreisförmig ausgebildet sein. Die Distanz zwischen den Scheitelpunkten der ersten Profilwandabschnitten ist bevorzugt grösser als die Distanz zwischen den beiden zweiten Profilwandabschnitten.

In einer weiteren Ausführungsvariante der Erfindung besteht das Deformationselement, neben Profilstegen, aus vier nach aussen gebogenen und vier geraden Profilwandabschnitten. Zwei gerade Profilwandabschnitte verlaufen jeweils parallel und in Distanz zueinander und liegen im rechten Winkel zu den anderen zwei ebenfalls parallel und in Distanz zueinander verlaufenden, geraden Profilwandabschnitten. Die gebogenen Profilwandabschnitte verbinden jeweils zwei in einem rechten Winkel zueinander liegende, gerade Profilwandabschnitte miteinander. Sie können bsp. viertelkreisförmig ausgebildet sein.

In einer nochmals anderen Ausführungsvariante der Erfindung bestehen die Profilwände des Deformationselements ausschliesslich aus gebogenen Wandabschnitten. Das Deformationselement weist gemäss dieser Ausführungsvariante bevorzugt eine kreisförmige, ovale oder ellipsenförmige Querschnitts-Aussenkontur auf. Solche Deformationselemente müssen in einem Richtwerkzeug über mindestens drei Punkte fixiert werden.

Das Deformationselement weist bevorzugt eine unterschiedliche Querschnittslänge und -breite auf, ist also länglich in seinem Querschnitt.

Das erfindungsgemässe Deformationselement enthält zwei, drei, vier, fünf, sechs oder mehr Kammern. Das Deformationselement ist besonders bevorzugt ein Hohlprofil mit vier, sechs oder mehr Kammern. Durch die Ausbildung von Mehrkammerhohlprofilen, insbesondere von Hohlprofilen mit vier, sechs oder mehr Kammern, wird ein gleichmässiges Verformungsverhalten des Deformationselementes ohne bedeutsamen Abfall des Kraftverlaufs während eines Aufprallereignisses erzielt.

Das Hohlprofil kann in Abhängigkeit der Anzahl auszubildenden Kammern einen, zwei, drei, vier oder mehr Profilstege enthalten. Die Profilstege verlaufen von Profilwand zu Profilwand oder verbinden zwei Profilstege miteinander. Sie können sich gegenseitig kreuzen bzw. in einem Winkel, insbesondere in einem rechten Winkel, schneiden.

Das erfindungsgemässe Deformationselement enthält bevorzugt keinen Knotenpunkt im Profilzentrum. Die Knotenpunkte sind vielmehr bevorzugt exzentrisch angeordnet. In einer bevorzugten Ausführung der Erfindung enthält das Deformationselement zwei voneinander beabstandet angeordnete, erste Profilstege, welche von einem quer zu diesen mittig verlaufenden zweiten Profilsteg durchkreuzt bzw. miteinander verbunden werden. Die zwei daraus resultierenden Knotenpunkte sind exzentrisch ausgebildet. Die ersten Profilstege können, wie nachfolgend genauer beschrieben, gebogen oder gerade sein. Der zweite Profilsteg ist bevorzugt gerade und bildet eine Symmetrieachse im Hohlprofil aus. Er verläuft entweder von Profilwand zu Profilwand oder verbindet lediglich die beiden ersten Profilstege miteinander.

Durch die exzentrische Anordnung der Knotenpunkte wird eine ideale Materialverteilung erreicht, welche eine gleichmässige Faltung des Deformationselementes in einem Aufprallereignis bewirkt. Dies ganz im Gegensatz zu Profilen, bei welchen die Profilstege in einem konzentrisch angeordneten Knotenpunkt zusammenlaufen und daher eine Materialanhäufung im Profilzentrum ausbilden.

Die Profilstege können gerade und/oder gebogen sein. Die gebogenen Profilstege liegen bevorzugt ebenfalls gebogenen Profilwandabschnitten gegenüber, wobei die Krümmungen des Profilstegs und des gegenüberliegenden Profilwandabschnitts einander entgegengesetzt sind. Gebogene Profilstege bezwecken eine gleichmässige Längenaufteilung der zwischen zwei Profilstegkontakten verlaufenden Profilwandabschnitte sowie eine gleichmässige Längenaufteilung der Profilstegabschnitte zwischen den einzelnen Knotenpunkten. Die oben beschriebene gleichmässige Längenaufteilung ergibt einen gleichmässigeren Faltungsvorgang und somit eine optimalen Kraftverlauf. Eine gleichmässige Längenaufteilung der genannten Art ist bei gewissen Querschnittsformen durch den Einsatz ausschliesslich gerader Profilstege nicht erreichbar.

In einer bevorzugten Ausführung der Erfindung enthält das Deformationselement zwei gebogene Profilstege welchen jeweils einen Profilwandabschnitt mit einem ebenfalls gebogenen Wandabschnitt gegenüber liegen. Die Krümmung des Profilstegs ist der Krümmung der diesem gegenüber liegenden Profilwand entgegengesetzt, so dass die Hohlkammern einen linsenartigen Querschnitt ausbilden.

Das Deformationselement ist bevorzugt ein Extrusionsprofil. Das Deformationselement besteht aus einem Metall, wie Stahl, und insbesondere aus Aluminium oder einer Aluminiumlegierung.

Das Deformationselement wird beispielsweise als Sicherheitsbauteil in Fahrzeugen, insbesondere in Strassen- oder Schienenfahrzeugen eingesetzt. Strassenfahrzeuge können bsp. Personenkraftwagen, Lastkraftwagen oder Busse sein.

Das Deformationselement wird bevorzugt als Energieabsorptionselement in Stossfängersystemen eingesetzt. Das Deformationselement ist hierzu bevorzugt zwischen einer vorderen bzw. hinteren Stossstange und einer daran anschliessenden Karosseriestruktur, insbesondere einem Fahrzeug-Längsträger, angeordnet. In der Regel werden in einem vorderen oder hinteren Stossfängersystem jeweils zwei seitlich angeordnete Deformationselemente verwendet. Das Deformationselement kann auch integraler Bestandteil der Längsträger sein.

Das Deformationselement als Sicherheitsbauteil in einem Stossfängersystem eines PKW's kann bsp. eine Länge von 5 bis 20 cm, insbesondere von 10 bis 15 cm, aufweisen. Die Dicke der Profilwände und Profilstege kann bsp. zwischen 1 und 5 mm, insbesondere zwischen 2 und 3 mm liegen. Die Wanddicken können uniform oder abschnittsweise unterschiedlich ausgebildet sein. Insbesondere die Profistege können von der Profilwand abweichende Wanddicken aufweisen und bsp. dünner ausgebildet sein.

Das erfindungsgemässe Deformationselement zeichnet sich dank den gebogenen Profilwandabschnitten durch seine gute Schweissbarkeit aus. Der Roboterarm der Schweissanlage kann gleichmässig entlang der gebogenen Wandabschnitte geführt werden und muss nicht mehr an Kanten bzw. Ecken neu angesetzt werden bzw. abrupte Richtungswechsel vollziehen. Gerade Profilwandabschnitte ermöglichen ein präzises Einspannen des Bauteils in ein Richtwerkzeug, womit sehr exakt geführte Schweissnähte erzielt werden können. Dank dem Mehrkammerprinzip wird ein sehr gleichmässiges Deformationsverhalten, ohne Abfallen des Kraftniveaus erreicht. Ferner verhindern die die Kammern begrenzenden Profilstege ein Wegkippen des Bauteils während des Faltvorganges.

Durch die exzentrische Anordnung der Kreuzungspunkte der Profilstege werden zudem Materialanhäufung in der Profilmitte und somit eine Kompaktion des Profils verhindert. Das Verformungsverhalten und somit das Energieabsorptionsvermögen des Deformationselements kann im übrigen durch die Anordnung und Dicke der Profilstege gesteuert werden.

Im folgenden wird die Erfindung beispielhaft und mit Bezug auf die beiliegenden Zeichnungen näher erläutert. Es zeigen:
- Fig. 1 a-g:: Querschnitt verschiedener Ausführungsformen eines erfindungsgemässen Deformationselements;
- Fig. 2:: perspektivische Ansicht eines erfindungsgemässen Deformationselements gemäss Fig. 1 c;
- Fig. 3:: Kraft-Weg-Diagramm eines erfindungsgemässen Deformationselements nach Fig. 1a.

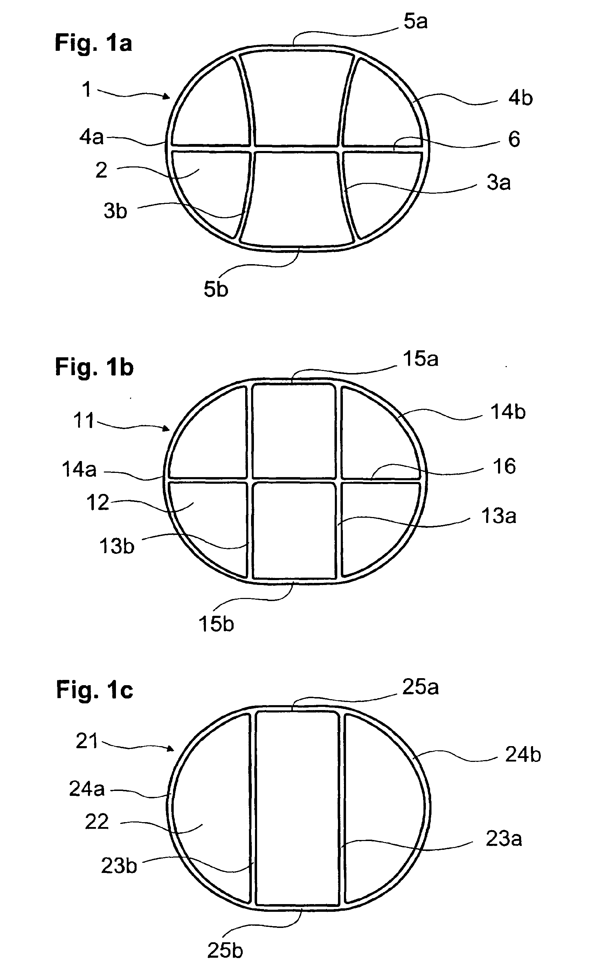

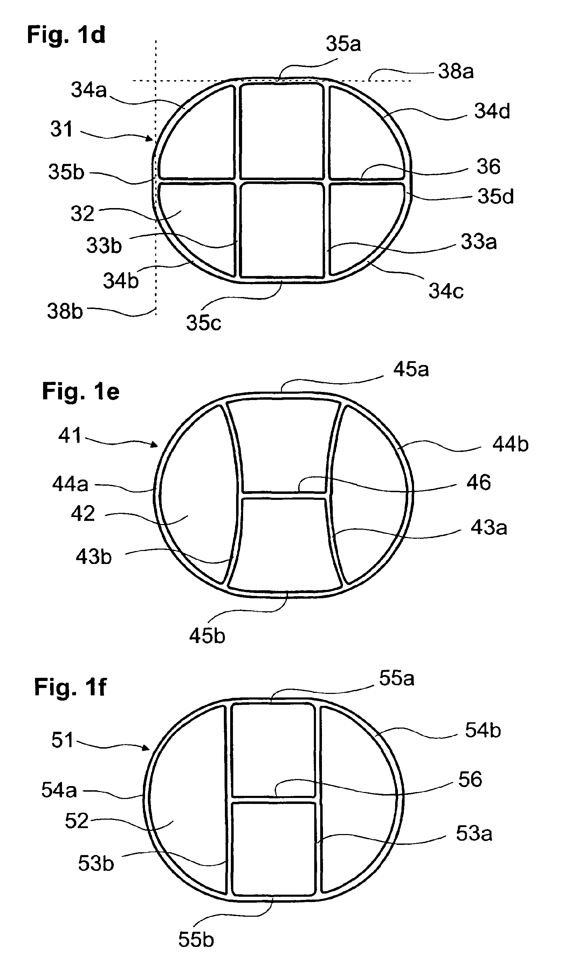

Fig. 1a bis 1g zeigen eine (nicht abschliessende) Auswahl an Ausführungsformen eines erfindungsgemässen Deformationselements. Die Ausführungsformen gemäss Fig. 1a bis 1c und 1e bis 1g zeigen ein Deformationselement 1; 11; 21; 41; 51; 61 mit äusseren Profilwänden sowie innen liegende Profilstegen 6, 3a, 3b; 16, 13a, 13b; 23a, 23b; 43a, 43b, 46; 53a, 53b, 56; 63a, 63b . Die äusseren Profilwände enthalten gebogene Profilwandabschnitte 4a, 4b; 14a, 14b; 24a, 24b; 44a, 44b; 54a, 54b; 64a, 64b, welche zwei in Distanz zueinander liegende und parallel verlaufende, gerade Profilwandabschnitte 5a, 5b; 15a, 15b; 25a, 25b; 45a, 45b; 55a, 55b; 65a, 65b miteinander verbinden. Die gebogene Profilwandabschnitte 4a, 4b; 14a, 14b; 24a, 24b; 44a, 44b; 54a, 54b; 64a, 64b sind teilkreisförmig ausgebildet.

Das Deformationselement 1 gemäss Fig. 1a enthält zwei gebogene Profilstege 3a, 3b, welchen jeweils ein gebogener Profilwandabschnitt 4a, 4b gegenüber liegt. Die Krümmung des Profilstegs 3a, 3b ist der Krümmung der diesem gegenüber liegenden Profilwandabschnitt 4a, 4b entgegengesetzt. Die beiden gebogenen Profilstege 3a, 3b werden von einem mittig quer laufenden, geraden Profilsteg 6 unter Ausbildung zweier exzentrisch angeordneter Knotenpunkte gekreuzt. Der gerade Profilsteg 6 schneidet am Scheitelpunkt der gebogenen Profilwandabschnitte 4a, 4b die Profilwand und bildet eine Symmetrieachse aus. Die gebogenen Profilwandabschnitte 3a, 3b können die Profilwand im Bereich des gebogenen 4a, 4b oder des geraden 5a, 5b Profilwandabschnitts oder im Übergang zwischen gebogenen und geraden Profilwandabschnitten schneiden. Die Profilstege bilden insgesamt sechs Hohlkammern aus.

Das Deformationselement 11 gemäss Fig. 1b enthält zwei parallel zueinander verlaufende gerade Profilstege 13a, 13b, welchen jeweils ein gebogener Profilwandabschnitt 14a, 14b gegenüber liegt. Die beiden parallelen Profilstege 13a, 13b werden von einem mittig quer laufenden, geraden Profilsteg 16 unter Ausbildung zweier exzentrisch angeordneter Knotenpunkte in einem rechten Winkel gekreuzt. Der gerade Profilsteg 16 schneidet am Scheitelpunkt der gebogenen Profilwandabschnitte 14a, 14b die Profilwand und bildet eine Symmetrieachse aus. Die zwei parallel zueinander verlaufenden, gerade Profilstege 13a, 13b schneiden die Profilwand im Übergang zwischen gebogenen und geraden Profilwandabschnitten. Die Profilstege bilden insgesamt sechs Hohlkammern aus.

Das Deformationselement 21 gemäss Fig. 1c enthält zwei parallel zueinander verlaufende gerade Profilstege 23a, 23b, welchen jeweils ein gebogener Profilwandabschnitt 14a, 14b gegenüber liegt. Die zwei parallel zueinander verlaufenden, geraden Profilstege 13a, 13b schneiden die Profilwand im Übergang zwischen gebogenem und geraden Profilwandabschnitten und bilden insgesamt drei Hohlkammern aus.

Das Deformationselement 31 gemäss Fig. 1d enthält zwei parallel zueinander verlaufende, gerade Profilstege 33a, 33b. Die beiden parallelen Profilstege 33a, 33b werden von einem mittig quer laufenden, geraden Profilsteg 36 unter Ausbildung zweier exzentrisch angeordneter Knotenpunkte in einem rechten Winkel gekreuzt. Die Profilwand bildet vier gebogene Wandabschnitte 34a, 34b, 34c, 34d aus, welche vier gerade Profilwandabschnitte 35a, 35b, 35c, 35d miteinander verbinden. Die vier geraden Profilwandabschnitte bilden zwei Paare von parallel verlaufenden Wandabschnitte aus, wobei die zwei Paare gerader Wandabschnitte im rechten Winkel zueinander liegen. Der gerade Profilsteg 36 schneidet die Profilwand in der Mitte der geraden Profilwandabschnitte 35b, 35d und bildet eine Symmetrieachse aus. Die zwei parallel zueinander verlaufenden, gerade Profilstege 33a, 33b schneiden die Profilwand im Übergang zwischen gebogenen und geraden Profilwandabschnitten. Die Profilstege bilden insgesamt sechs Hohlkammern aus. Der gerade Profilsteg 36 bildet eine Symmetrieachse aus.

Der Radius der gebogenen Profilwandabschnitte 34a, 34b, 34c, 34d ist so gewählt, dass sich die Mittellinien 38a, 38b der geraden Profilwandabschnitte 35a, 35b, 35c. 35d ausserhalb des Profilquerschnitts schneiden.

Das Deformationselement 41 gemäss Fig. 1e enthält zwei gebogene Profilstege 43a, 43b, welchen jeweils ein gebogener Profilwandabschnitt 44a, 44b gegenüber liegt. Die Krümmung des Profilstegs 43a, 43b ist der Krümmung der diesem gegenüber liegenden Profilwandabschnitt 44a, 44b entgegengesetzt. Die beiden gebogenen Profilstege 43a, 43b sind von einem mittig quer laufenden, geraden Profilsteg 46 unter Ausbildung zweier exzentrisch angeordneter Knotenpunkte miteinander verbunden. Die gebogenen Profilwandabschnitte 43a, 43b können die Profilwand im Bereich des gebogenen 44a, 44b oder des geraden 45a, 45b Profilwandabschnitts oder im Übergang zwischen gebogenen und geraden Profilwandabschnitten schneiden. Die Profilstege bilden insgesamt vier Hohlkammern aus.

Das Deformationselement 51 gemäss Fig. 1f enthält zwei parallel zueinander verlaufende, gerade Profilstege 53a, 53b. Die beiden parallelen Profilstege 53a, 53b werden von einem mittig quer laufenden, geraden Profilsteg 56 unter Ausbildung zweier exzentrisch angeordneter Knotenpunkte in einem rechten Winkel miteinander verbunden. Die Profilstege bilden insgesamt vier Hohlkammern aus.

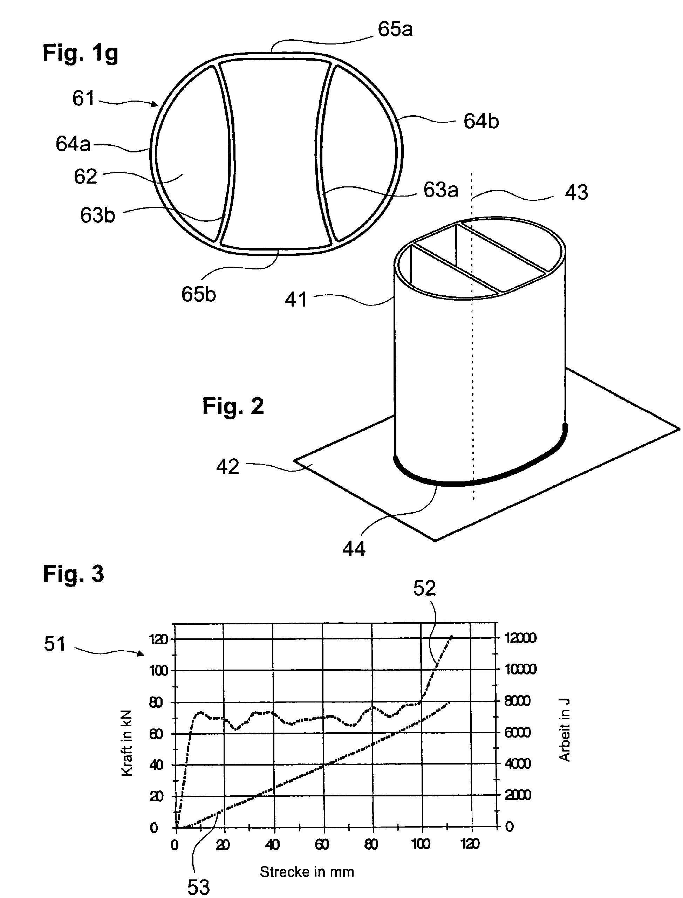

Das Deformationselement 61 gemäss Fig. 1g enthält zwei gebogene Profilstege 63a, 63b, welchen jeweils ein gebogener Profilwandabschnitt 64a, 64b gegenüber liegt. Die Krümmung des Profilstegs 63a, 63b ist der Krümmung der diesem gegenüber liegenden Profilwandabschnitt 64a, 64b entgegengesetzt. Die gebogenen Profilwandabschnitte 63a, 63b können die Profilwand im Bereich des gebogenen 64a, 64b oder des geraden 65a, 65b Profilwandabschnitts oder im Übergang zwischen gebogenen und geraden Profilwandabschnitten schneiden. Die Profilstege bilden insgesamt drei Hohlkammern aus.

Die paarweise angeordneten ersten Profilstege nach Fig. 1a bis 1g verbinden jeweils Profilwände über die Querschnittsbreite des Profils, während der fallweise vorhandene zweite Profilsteg über die gesamte oder einen Teil der Querschnittslänge des Profils verläuft.

Fig. 2 zeigt ein stirnseitig auf eine Platine 42 unter Ausbildung einer Schweissnaht 44 aufgeschweisstes Deformationselement 41 gemäss Fig. 1c in perspektivischer Ansicht.

Das Diagramm 51 gemäss Fig. 3 zeigt den Kraftverlauf 51 eines durch ein Aufprallereignis gestauchten Deformationselementes nach Fig. 1a. Die Kraftkurve zeigt eine relativ kleine Kraftspitze zu Beginn des Deformationsvorganges. Der Kraftverlauf nach Auslösung des Faltvorganges ist flach und weist bemerkenswert kleine Amplituden auf. Daraus lässt sich ein sehr gleichmässiges Falten des Bauteils ableiten. Die Kurve 53 wiedergibt die integrierte Absorptionsenergie in Joule.

## Patentansprüche

1. Deformationselement (1) aus Metall mit einem Mehrkammer-Hohlprofil mit einer Profillängsachse (43) zur Aufnahme von in Richtung der Profillängsachse (43) einwirkender Aufprallenergie, enthaltend wenigstens einen innen liegenden, das Hohlprofil in mehrere Kammern unterteilenden Profilsteg (3a, 3b, 6), wobei die Profilaussenwände (4, 5) anstelle von sich in Eckbereichen in einem Winkel schneidenden geraden Profilwänden gegen aussen gebogene Wandabschnitte (4) aufweisen,
**dadurch gekennzeichnet, dass**
das Deformationselement zusätzlich zu den gebogenen Wandabschnitten (4a, 4b; 14a, 14b; 24a, 24b; 34a, 34b, 34c, 34d; 44a, 44b; 54a, 54b; 64a, 64b), gerade Wandabschnitte (5a, 5b; 15a, 15b; 25a, 25b; 35a, 35b, 35c, 35d; 45a, 45b; 55a, 55b; 65a, 65b) enthält, wobei der Radius der gebogenen Wandabschnitte (4a, 4b; 14a, 14b; 24a, 24b; 34a, 34b, 34c, 34d; 44a, 44b; 54a, 54b; 64a, 64b) so gewählt ist, dass sich die Mittellinien der an die gebogenen Wandabschnitte anschliessenden geraden Wandabschnitte (5a, 5b; 15a, 15b; 25a, 25b; 35a, 35b, 35c, 35d; 45a, 45b; 55a, 55b; 65a, 65b) in einem Punkt ausserhalb des Profilquerschnittes schneiden und wobei der jeweilige Radius der gebogenen Wandabschnitte (4) grösser als ein Achtel des kleinsten Querschnittsdurchmessers des Deformationselements (1) ist.

2. Deformationselement nach Anspruch 1, wobei der jeweilige Radius der gebogenen Wandabschnitte (4) grösser als ein Viertel, vorzugsweise grösser als ein Drittel, des kleinsten Querschnittsdurchmessers des Deformationselements (1) ist.

3. Deformationselement nach einem der Ansprüche 1 bis 2, wobei die Profilaussenwände (4) wenigstens zu 25 %, vorzugsweise wenigstens zu 50 % bezogen auf ihre Gesamtumfangslänge eine gebogene Aussenkontur ausbilden.

4. Deformationselement nach einem der Ansprüche 1 bis 3, wobei das Deformationselement (31) gerade Wandabschnitte (35a, 37a) enthält, und der Radius der gebogenen Wandabschnitte (34a) so gewählt ist, dass sich die Mittellinien (38a, 38b) der an die gebogenen Wandabschnitte (34a) anschliessenden geraden Wandabschnitte (35a, 37a) in einem Punkt ausserhalb des Profilquerschnittes schneiden.

5. Deformationselement nach einem der Ansprüche 1 bis 4, wobei das Deformationselement (31) gerade Wandabschnitte (35a, 35b, 37a, 37b) enthält und der Radius der gebogenen Wandabschnitte (34a, 34b, 34c, 34d) wenigstens der halben Länge, vorzugsweise wenigstens der Länge der an die gebogenen Wandabschnitte anschliessenden geraden Wandabschnitte entspricht.

6. Deformationselement nach einem der Ansprüche 1 bis 5, wobei das Deformationselement (1) aus zwei gebogenen ersten Profilwandabschnitten (4a, 4b) und zwei geraden und parallel zueinander verlaufenden zweiten Profilwandabschnitten (5a, 5b) besteht, und die gebogenen ersten Profilwandabschnitte (4a, 4b) die zwei in Abstand zueinander verlaufenden, geraden zweiten Profilwandabschnitte (5a, 5b) miteinander verbinden.

7. Deformationselement nach einem der Ansprüche 1 bis 6, wobei das Deformationselement aus vier gebogenen (34a, 34b, 34c, 34d) und vier geraden (35a, 35b, 35c, 35d) Profilwandabschnitten besteht und zwei gerade Profilwandabschnitte jeweils parallel und in Distanz zueinander und im rechten Winkel zu den anderen zwei ebenfalls parallel und in Distanz zueinander verlaufenden, geraden Profilwandabschnitten liegen, und die gebogenen Profilwandabschnitte (34a) jeweils zwei in einem rechten Winkel zueinander liegende, gerade Profilwandabschnitte (35a, 35b) miteinander verbinden.

8. Deformationselement nach einem der Ansprüche 1 bis 2, wobei die Profilwände ausschliesslich aus gebogenen Wandabschnitten bestehen und das Deformationselement vorzugsweise eine kreisförmige, ovale oder ellipsenförmig Aussenkontur aufweist.

9. Deformationselement nach einem der Ansprüche 1 bis 8, wobei das Deformationselement unter Ausbildung wenigstens eines Knotenpunktes wenigstens zwei, sich in einem Winkel schneidende oder treffende Profilstege (6, 3a) enthält und die Knotenpunkte exzentrisch angeordnet sind.

10. Deformationselement nach einem der Ansprüche 1 bis 9, wobei das Hohlprofil wenigstens vier und insbesondere wenigstens sechs Kammern (12), welche durch wenigstens drei Profilstege (6, 3a, 3b) ausgebildet sind, enthält.

11. Deformationselement nach einem der Ansprüche 1 bis 10, wobei das Deformationselement wenigstens einen, vorzugsweise zwei gebogene Profilstege (3a, 3b) aufweist, und dem oder den Profilstegen jeweils ein Profilwandabschnitt (4a, 4b) mit einem gebogenen Wandabschnitt gegenüber liegt und die Krümmung des Profilstegs der Krümmung der diesem gegenüber liegenden Profilwand entgegengesetzt ist.

12. Deformationselement nach einem der Ansprüche 1 bis 11, wobei das Hohlprofil ein Extrusionsprofil ist.

13. Deformationselement nach einem der Ansprüche 1 bis 12, wobei das Hohlprofil aus Aluminium oder einer Aluminiumlegierung besteht.

14. Verwendung des Deformationselements nach einem der Ansprüche 1 bis 13 in Fahrzeugen, insbesondere in Strassen- oder Schienenfahrzeugen.

15. Verwendung nach Anspruch 14, wobei das Deformationselement zwischen Stossstange und der daran anschliessenden Karosseriestruktur, insbesondere einem Längsträger, angeordnet ist.

## Claims

1. Deformation element (1) made of metal comprising a multi-chamber hollow profile with a profile longitudinal axis (43) for absorbing impact energy acting in the direction of the profile longitudinal axis (43), containing at least one internal profile web (3a, 3b, 6) dividing the hollow profile into a plurality of chambers, the profile outer walls (4, 5) comprising wall portions (4) which are curved outwards instead of straight profile walls intersecting at an angle in corner regions, **characterised in that** the deformation element contains straight wall portions (5a, 5b; 15a, 15b; 25a, 25b; 35a, 35b, 35c, 35d; 45a, 45b; 55a, 55b; 65a, 65b) in addition to the curved wall portions (4a, 4b; 14a, 14b; 24a, 24b; 34a, 34b, 34c, 34d; 44a, 44b; 54a, 54b; 64a, 64b), the radius of the curved wall portions (4a, 4b; 14a, 14b; 24a, 24b; 34a, 34b, 34c, 34d; 44a, 44b; 54a, 54b; 64a, 64b) being selected in such a way that the centre lines of the straight wall portions (5a, 5b; 15a, 15b; 25a, 25b; 35a, 35b, 35c, 35d; 45a, 45b; 55a, 55b; 65a, 65b) adjacent to the curved wall portions intersect at a point outside the profile cross-section and the respective radius of the curved wall portions (4) being greater than one eighth of the smallest cross-section diameter of the deformation element (1).

2. Deformation element according to claim 1, wherein the respective radius of the curved wall portions (4) is more than one quarter, preferably more than one third, of the smallest cross-section diameter of the deformation element (1).

3. Deformation element according to either claim 1 or claim 2, wherein the profile outer walls (4) form a curved outer contour for at least 25 %, preferably at least 50 %, of the total peripheral length thereof.

4. Deformation element according to any one of claims 1 to 3, wherein the deformation element (31) contains straight wall portions (35a, 37a) and the radius of the curved wall portions (34a) is selected in such a way that the centre lines (38a, 38b) of the straight wall portions (35a, 37a) adjacent to the curved wall portions (34a) intersect at a point outside the profile cross-section.

5. Deformation element according to any one of claims 1 to 4, wherein the deformation element (31) contains straight wall portions (35a, 35b, 37a, 37b) and the radius of the curved wall portions (34a, 34b, 34c, 34d) is at least half as long, preferably at least as long, as the straight wall portions adjacent to the curved wall portions.

6. Deformation element according to any one of claims 1 to 5, wherein the deformation element (1) consists of two curved first profile wall portions (4a, 4b) and two straight second profile wall portions (5a, 5b) which extend parallel to one another, and the curved first profile wall portions (4a, 4b) interconnect the straight second profile wall portions (5a, 5b), which extend at a distance from one another.

7. Deformation element according to any one of claims 1 to 6, wherein the deformation element consists of four curved (34a, 34b, 34c, 34d) and four straight (35a, 35b, 35c, 35d) profile wall portions, and in each case two straight profile wall portions lie parallel to and at a distance from one another and at a right angle to the other two straight profile wall portions, which likewise extend parallel to and at a distance from one another, and the curved profile wall portions (34a) each interconnect two straight profile wall portions (35a, 35b) which lie at a right angle to one another.

8. Deformation element according to either claim 1 or claim 2, wherein the profile walls consist exclusively of curved wall portions and the deformation element preferably has a circular, oval or elliptic outer contour.

9. Deformation element according to any one of claims 1 to 8, wherein the deformation element contains at least two profile webs (6, 3a) which intersect or meet at an angle to form at least one node point and the node points are arranged eccentrically.

10. Deformation element according to any one of claims 1 to 9, wherein the hollow profile contains at least four and in particular at least six chambers (12) which are formed by at least three profile webs (6, 3a, 3b).

11. Deformation element according to any one of claims 1 to 10, wherein the deformation element comprises at least one, preferably two curved profile webs (3a, 3b) and in each case a profile wall portion (4a, 4b) with a curved wall portion lies opposite the profile web or webs, and the curvature of the profile web is opposed to the curvature of the profile wall lying opposite said profile web.

12. Deformation element according to any one of claims 1 to 11, wherein the hollow profile is an extrusion profile.

13. Deformation element according to any one of claims 1 to 12, wherein the hollow profile consists of aluminium or an aluminium alloy.

14. Use of the deformation element according to any one of claims in 1 to 13 in vehicles, in particular in road or rail vehicles.

15. Use according to claim 14, wherein the deformation element is arranged between the bumper and the vehicle body construction adjacent thereto, in particular a side member.

## Revendications

1. Elément déformable (1) en métal comprenant un profilé creux à compartiments multiples avec un axe longitudinal de profilé (43), pour absorber de l'énergie d'impact agissant dans la direction de l'axe longitudinal de profilé (43), l'élément comprenant au moins une nervure de profilé (3a, 3b, 6) qui est située à l'intérieur et subdivise le profilé creux en plusieurs compartiments, les parois extérieures de profilé (4, 5) présentant, à la place de parois de profilé rectilignes qui se coupent selon un certain angle dans les zones de coin, des tronçons de paroi (4) cintrés vers l'extérieur,
**caractérisé en ce que** l'élément déformable comprend en plus des tronçons de paroi cintrés (4a, 4b ; 14a, 14b ; 24a, 24b ; 34a, 34b, 34c, 34d ; 44a, 44b ; 54a, 54b ; 64a, 64b), des tronçons de paroi rectilignes (5a, 5b ; 15a, 15b ; 25a, 25b ; 35a, 35b, 35c, 35d ; 45a, 45b ; 55a, 55b ; 65a, 65b), le rayon des tronçons de paroi cintrés (4a, 4b ; 14a, 14b ; 24a, 24b ; 34a, 34b, 34c, 34d ; 44a, 44b ; 54a, 54b ; 64a, 64b) étant choisi de façon telle que les lignes centrales des tronçons de paroi rectilignes (5a, 5b ; 15a, 15b ; 25a, 25b ; 35a, 35b, 35c, 35d ; 45a, 45b ; 55a, 55b ; 65a, 65b) se raccordant aux tronçons de paroi cintrés, se coupent en un point à l'extérieur de la section transversale du profilé, et le rayon respectif des tronçons de paroi cintrés (4) est supérieur à un huitième du plus petit diamètre de section transversale de l'élément déformable (1).

2. Elément déformable selon la revendication 1, dans lequel le rayon respectif des tronçons de paroi cintrés (4) est supérieur à un quart, de préférence supérieur à un tiers du plus petit diamètre de section transversale de l'élément déformable (1).

3. Elément déformable selon l'une des revendications 1 à 2, dans lequel les parois extérieures de profilé (4) forment un contour extérieur cintré sur au moins 25%, de préférence sur au moins 50% en se référant à leur longueur périphérique totale.

4. Elément déformable selon l'une des revendications 1 à 3, dans lequel l'élément déformable (31) comprend des tronçons de paroi rectilignes (35a, 37a), et le rayon des tronçons de paroi cintrés (34a) est choisi de façon telle que les lignes centrales (38a, 38b) des tronçons de paroi rectilignes (35a, 37a) se raccordant aux tronçons de paroi cintrés (34a), se coupent en un point à l'extérieur de la section transversale du profilé.

5. Elément déformable selon l'une des revendications 1 à 4, dans lequel l'élément déformable (31) comprend des tronçons de paroi rectilignes (35a, 35b, 37a, 37b), et le rayon des tronçons de paroi cintrés (34a, 34b, 34c, 34d) correspond au moins à la moitié de la longueur, de préférence au moins à la longueur des tronçons de paroi rectilignes se raccordant aux tronçons de paroi cintrés.

6. Elément déformable selon l'une des revendications 1 à 5, dans lequel l'élément déformable (1) est constitué de deux premiers tronçons de paroi de profilé (4a, 4b) cintrés, et de deux deuxièmes tronçons de paroi de profilé (5a, 5b) rectilignes et s'étendant parallèlement l'un à l'autre, et les deux premiers tronçons de paroi de profilé (4a, 4b) cintrés relient ensemble les deux deuxièmes tronçons de paroi de profilé (5a, 5b) rectilignes, qui s'étendent à distance l'un à l'autre.

7. Elément déformable selon l'une des revendications 1 à 6, dans lequel l'élément déformable est constitué de quatre tronçons de paroi de profilé cintrés (34a, 34b, 34c, 34d) et de quatre tronçons de paroi de profilé rectilignes (35a, 35b, 35c, 35d), et deux tronçons de paroi de profilé rectilignes sont agencés parallèlement l'un à l'autre et à distance l'un de l'autre ainsi qu'à angle droit par rapport aux deux autres tronçons de paroi de profilé rectilignes s'étendant également de manière parallèle l'un à l'autre et à distance l'un de l'autre, et les tronçons de paroi de profilé cintrés (34a) relient chacun respectivement deux tronçons de paroi de profilé rectilignes (35a, 35b) placés à angle droit l'un par rapport à l'autre.

8. Elément déformable selon l'une des revendications 1 à 2, dans lequel les parois de profilé sont constituées exclusivement de tronçons de paroi cintrés, et l'élément déformable présente de préférence un contour extérieur de forme circulaire, ovale ou elliptique.

9. Elément déformable selon l'une des revendications 1 à 8, dans lequel l'élément déformable renferme au moins deux nervures de profilé (6, 3a) se coupant ou se rencontrant selon un certain angle en formant au moins un noeud de jonction, et les noeuds de jonction sont agencés de façon excentrique.

10. Elément déformable selon l'une des revendications 1 à 9, dans lequel le profilé creux comprend au moins quatre, et notamment au moins six compartiments (12) qui sont formés par au moins trois nervures de profilé (6, 3a, 3b).

11. Elément déformable selon l'une des revendications 1 à 10, dans lequel l'élément déformable présente au moins une, de préférence deux nervures de profilé cintrées (3a, 3b), et à la nervure de profilé ou aux nervures de profilé est opposé respectivement un tronçon de paroi de profilé (4a, 4b) avec un tronçon de paroi cintré, et la courbure de la nervure de profilé est de sens inverse par rapport à la courbure de la paroi de profilé qui est opposée à cette nervure de profilé.

12. Elément déformable selon l'une des revendications 1 à 11, dans lequel le profilé creux est un profilé d'extrusion.

13. Elément déformable selon l'une des revendications 1 à 12, dans lequel le profilé creux est réalisé en aluminium ou un alliage d'aluminium.

14. Utilisation de l'élément déformable selon l'une des revendications 1 à 13 dans des véhicules, en particulier des véhicules routiers ou des véhicules ferroviaires.

15. Utilisation selon la revendication 14, d'après laquelle l'élément déformable est agencé entre le pare-choc et la structure de carrosserie, notamment un longeron, qui s'y raccorde.
